# EUROPEAN PATENT SPECIFICATION

(11) **EP 2 330 287 B1**
(45) Date of publication and mention of the grant of the patent: **26.02.2014**
(21) Application number: 09015044.2
(22) Date of filing: 04.12.2009
(51) Int. Cl.: F02M 25/07

(54) **Exhaust gas recirculation method and system**
Abgasrückführungsverfahren und -system
Procédé et système de recirculation des gaz d'échappement

(43) Date of publication of application: 08.06.2011
(60) Divisional application: 13178924.0
(73) Proprietor: Caterpillar Motoren GmbH & Co. KG, 24159 Kiel (DE)
(72) Inventor: Schlemmer-Kelling, Udo, 24113 Molfsee (DE); Neumann, Anke, 24589 Nortorf (DE)
(74) Representative: Kramer - Barske - Schmidtchen

(56) References cited:
- EP-A1- 0 707 142
- WO-A1-96/18030
- US-A1- 2007 119 171

## Description

### Technical Field

The present disclosure refers to an exhaust gas recirculation system configured to be used in internal combustion engines, e.g., large internal combustion engines having an air inlet and an exhaust gas outlet, operated with fuels such as e.g. heavy fuel oils, and the disclosure refers to a large internal combustion engine comprising an air inlet, an exhaust gas outlet, and an exhaust gas recirculation system. Furthermore, the present disclosure refers to a method for recirculating an exhaust gas flow of an internal combustion engine having an air inlet and an exhaust gas outlet.

### Background

Generally, the terminology "large internal combustion engine" used herein may refer to internal combustion engines which may be used as main or auxiliary engines of ships/vessels such as cruiser liners, cargo ships, container ships, and tankers, or in power plants for production of heat and/or electricity. In particular, large internal combustion engines may be configured to burn at least one fuel selected from the group consisting of diesel and heavy fuel oil (HFO).

Heavy fuel oil may contain "asphaltenes". Asphaltenes may be defined as molecular substances that are found in crude oil, along with resins, aromatic hydrocarbon, and alkane (i.e., saturated hydrocarbons). Asphaltenes may consist primarily of carbon, hydrogen, nitrogen, oxygen, and sulphur, as well as trace amounts of vanadium and nickel. The C:H ratio may be approximately 1:1.2, depending on the asphaltene source.

Asphaltenes may also be defined operationally as the n-heptane (C₇H₁₆) insoluble, toluene (C₆H_{S}CH3) soluble component of a carbaonaceous material such as crude oil, bitumen or coal. Asphaltenes have been shown to have a distribution of molecular mass mlecular mass in the range of 400 atomic mass unit to 1500 u with a maximum around 750 u. All techniques are now roughly in accord, including many different mass spectral methods (ESI FT-ICR MS, APPI, APCI FIMS, LDI) and many different diffusion techniques (time-resolved fluorescence depolarization (TRFD), fluorescence correlation spectroscopy (FCS), Taylor dispersion). Aggregation of asphaltenes at very low concentrations (in toluene) led to aggregate weights being misinterpreted as molecular weights with techniques such as VPO or GPC. The chemical structure is difficult to ascertain, due to the complex nature of the asphaltenes, but has been studied by all available techniques including X-ray, elemental, and pyrolysis GC-FID-GC-MS. However, it is undisputed that the asphaltenes are composed mainly of polyaromatic carbon i.e. polycondensed aromatic benzene units with oxygen, nitrogen, and sulphur, (NSO-compounds) combined with minor amounts of a series of heavy metals, particularly vanadium and nickel which occur in porphyrin structures. Furthermore, asphaltene rotational diffusion measurements show that small PAH chromophores (blue fluorescing) are in small asphaltene molecules while big PAH chromophores (red fluorescing) are in big molecules. This implies that there is only one fused Polycyclic aromatic hydrocarbon (PAH) ring system per molecule. Very recent fragmentation studies by FT ICR-MS strongly support this 'island' molecular architecture refuting the 'archipelago' molecular architecture. Asphaltenes may be today widely recognized as soluble, chemically altered fragments of Kerogen which migrated out of the source rock for the oil, during oil catagenesis. Asphaltenes had been thought to be held in solution in oil by resins (similar structure and chemistry, but smaller) but recent data shows this is incorrect. Indeed it has recently been suggested that asphaltenes are nanocolloidally suspended in crude oil and in toluene solutions of sufficient concentrations. In any event for low surface tension liquids such as alkanes and toluene, surfactants are not necessary to maintain nanocolloidal suspensions of asphaltenes.

Heavy oils, and biodegraded oils (as bacteria can not assimilate asphalten[e]s, but readily consume saturated hydrocarbons and certain aromatic hydrocarbon isomers - enzymatically controlled) may contain much higher proportions of asphaltenes than do medium API gravity oils or light crude oils. Condensates are virtually devoid of asphaltenes.

The water content of heavy fuel oils may vary widely. Water may come from several different sources, it can be either fresh or saline. It can also originate from e.g. condensation in the installation's storage tanks. If water is sweet and well emulsified in heavy fuel oil, the effective energy content of the fuel decreases with increasing water content, leading to an increase in fuel consumption. If heavy fuel oil is contaminated with seawater, the chlorine in the salt may cause corrosion of the fuel handling system, including the fuel injection equipment.

Sulphur in fuel may cause cold corrosion and corrosive wear, especially in low load operation. Sulphur may also contribute to deposit formation in the exhaust system, normally together with vanadium and/or sodium in the form of sulphates. The deposits can also cause high-temperature corrosion. Sulphur is a fuel property that has been the subject of much discussion recently. For example the International Maritime Organization (IMO) is proposing, and the European Union (EU) has set limits on fuel sulphur content to reduce emissions of sulphur oxides.

High ash content may be detrimental in several ways. Different ash constituents, like vanadium, nickel, sodium, aluminium and silicon can cause different kinds of problems. Aluminium and silicon oxides originate from the refining process, and can cause severe abrasive wear mainly to the injection pumps and nozzles, but also to the cylinder liner and piston rings. Efficient fuel separation is a must for minimizing component wear.

Oxides of vanadium and sodium, mainly sodium vanadyl vanadates, are formed during combustion, and will mix or react with oxides and vanadates of other ash constituents, e.g. nickel, calcium, silicon and sulphur. The sticking temperature of the mixture may cause a deposit to be formed on an exhaust valve, in the exhaust gas system, or in the turbocharger. This deposit may be highly corrosive in molten salt. It may destroy the protective oxide layer, e.g. on an exhaust valve, and leads to hot corrosion and a burned valve. Deposits and hot corrosion in the turbocharger, especially on the nozzle ring and turbine blades, may reduce turbocharger efficiency.

The gas exchange may also be disturbed, less air flows through the engine, and thus the thermal load on the engine may increase. Deposit formation may increase at increased temperatures and engine outputs. Several measures are necessary to avoid these problems when running on high-ash heavy fuel oils. It is important, for example, to have an efficient fuel separation system, to clean the turbocharger regularly, and to ensure strict quality control of the bunkered fuel, i.e. to see that the amounts of ash and dangerous ash constituents stay low. It is also essential to ensure clean air filters and charge air coolers by regular cleaning based on pressure drop monitoring.

A high carbon residue content may lead to deposit formation in the combustion chamber and in the exhaust system, especially at low engine loads.

A high asphaltene content may contribute to deposit formation in the combustion chamber and in the exhaust system, especially at low loads. Asphaltenes are complex, highly aromatic compounds with a high molecular weight that usually contain sulphur, nitrogen and oxygen, as well as metals like vanadium, nickel and iron. A high asphaltene content indicates that a fuel may be difficult to ignite and will burn slowly. If heavy fuel oil is unstable, the asphaltenes will precipitate from the fuel and block filters and/or cause deposits in the fuel system, as well as lead to excessive sludge formation in the fuel separator. Moreover, when operating on heavy fuel oils with high asphaltene content, good performance of the lubricating oil should be emphasized. It is important that the lubricating oil is able to bind the combustion residues containing asphaltenes from blow-by gases entering the crankcase and thus prevent deposit formation on the engine component surfaces.

All heavy fuel oils contain a certain amount of sediment. The sediment can be both organic and inorganic. Total sediment content (TSP analysis) describes the fuel's cleanliness (presence of sand, rust, dirt, catalyst fines and other solid/inorganic contaminants), stability (resistance to breakdown and precipitate asphaltenes), and compatibility with another fuel quality.

An internal combustion engine may include one or more turbochargers for compressing a fluid which is supplied to one or more combustion chambers within corresponding combustion cylinders of an internal combustion engine. The fluid compressed by the compressor may be intake air or fresh air. Each turbocharger may typically include a turbine driven by an exhaust gas flow of the engine and a compressor which is driven by the turbine. The compressor may receive the fluid to be compressed and may supply the compressed fluid to the combustion chambers.

An exhaust gas recirculation system (EGR system) may be used for controlling the generation of undesirable pollutant gases and particulate matter in the operation of internal combustion engines. Such systems have proven particularly useful in internal combustion engines used in e.g. ships and generator sets. EGR systems primarily recirculate a part of the exhaust gas into the intake air supply of the internal combustion engine. The exhaust gas which is reintroduced to the engine's cylinder may reduce the concentration of oxygen, which intern lowers the maximum combustion temperature within a cylinder and slows the chemical reaction of the combustion process, decreasing the formulation of nitro oxide (NOx). Furthermore, the exhaust gases may typically contain unburned hydrocarbons which are burned on reintroduction into the engine cylinder, which may further reduce the emission of exhaust gas byproducts which would be emitted as undesirable pollutants from the internal combustion engine.

An EGR system as described above, may be used to control the amount of exhaust gas which is mixed with the combustion air before introduction into an intake manifold.

WO 96/18030 discloses an arrangement for recirculation of exhaust gases in turbocharged or supercharged engines with turbines in series. This known arrangement includes an EGR turbine driven by the exhaust gases discharged at the exhaust gas outlet of the internal combustion engine. The EGR turbines drive an EGR compressor which compresses a partial exhaust gas flow. An exhaust gas cooler is arranged downstream of the EGR compressor between the EGR compressor and an inlet manifold of the internal combustion engine. The exhaust gas cooler may serve to compensate an increased temperature imported to the recirculated exhaust gases by the EGR compressor. Alternatively, the exhaust gas cooler may be placed upstream of the EGR compressor.

EP 0 707 142 A1 (corresponding to US 5,564,275 A) discloses a method and apparatus for high-pressure and exhaust gas recirculation on a supercharged internal combustion engine. Here, a third exhaust gas flow of the internal combustion engine may expand separately from a first exhaust gas flow and may provide power to compress the second exhaust gas flow. A turbine is arranged as a drive for the exhaust gas compressor. The exhaust gas duct system has a third exhaust gas duct connected to the turbine. An exhaust gas cooler is arranged in the second exhaust gas duct downstream of the exhaust gas compressor.

A similar exhaust gas recirculation system for an internal combustion engine for passenger cars or trucks is shown in WO 2008/062254 A1. Here, an EGR turbine is located upstream of an EGR cooler. Thus, EGR gas flowing from an exhaust manifold goes through the EGR turbine prior to entering the EGR cooler. Due to the pressure reduction occurring the turbine, the EGR gas temperature may be lowered at the intake manifold inlets, and less cooling power from the engine cooling system may be required to cool down the EGR gas in the EGR cooler.

A problem may arrive within the duct or line system of the exhaust gas recirculation system if burning fuels commonly used for operating in large combustion engines may produce sulphur acid or the like, contained within the recirculated exhaust gases. The sulphur acid and/or other components (e.g. sulphur as such, sulphur together with vanadium and/or sodium in the form of sulphates, ash constituents like vanadium, nickel, sodium, aluminum and silicon) of the exhaust gas (e.g. H₂SO₃ or H₂SO₄) may have a negative effect on the exhaust gas line system. Corrosion may be one of the negative effects generated by one or more of the components of the exhaust gas flow, for example, sulphur acid etc. may result in strong corrosion of the exhaust gas line systems.

The present disclosure is directed, at least in part, to improving or overcoming one or more aspects of prior systems.

### Summary of the Disclosure

According to a first aspect of the present disclosure an exhaust gas recirculation system configured to be used in, e.g., a large internal combustion engine having an air inlet and an exhaust gas outlet may comprise an exhaust gas recirculation line configured to recirculate a first partial exhaust gas flow to the air inlet of the internal combustion engine. In addition, an exhaust gas discharge line may be fluidly connected to the exhaust gas recirculation line and configured to discharge at least a second partial exhaust gas flow. An exhaust gas turbine may be provided and configured to be driven by the second partial exhaust gas flow. An exhaust gas compressor may be provided and configured to be driven by the exhaust gas turbine and to compress the exhaust gas of the first partial exhaust gas flow. Furthermore, a first exhaust gas cooler may be arranged upstream of the exhaust gas compressor and configured to cool the exhaust gas of the first partial exhaust gas flow to a first temperature. A second exhaust gas cooler may be arranged downstream of the exhaust gas compressor and configured to cool the compressed exhaust gas of the first partial exhaust gas flow to a second temperature. The first and second temperatures may be equal or different.

The exhaust gas of the first partial exhaust gas flow may be cooled to a temperature above a dew point of a predetermined component of the exhaust gas, and/or the compressed exhaust gas may be cooled to a temperature below said dew point.

In another aspect of the present disclosure an internal combustion engine such as a large internal combustion engine may comprise engine an air inlet, an exhaust gas outlet, and an exhaust gas recirculation system described herein.

According to a further aspect of the present disclosure a method for recirculating an exhaust gas flow of a large internal combustion engine having air inlet and exhaust gas outlet may be provided. The method may comprise the steps of diverting a first partial exhaust gas flow, cooling the exhaust gas of the first partial exhaust gas flow and compressing the cooled first partial exhaust gas flow. Furthermore, the compressed exhaust gas of the first partial exhaust gas flow may be cooled again and may subsequently be supplied to the air inlet of the large internal combustion engine.

The exhaust gas of the first partial exhaust gas flow may be cooled to a temperature above a dew point of a predetermined component of the exhaust gas, and/or the compressed exhaust gas may be cooled to a temperature below said dew point.

Other features and aspects of this disclosure will be apparent from the following description, the accompanying drawings, and the claims.

### Brief Description of the Drawings

Fig. 1 is a schematic block diagram of an exemplary embodiment of the present disclosure, and

Fig. 2 is a schematic internal combustion engine cooling circuit diagram of a further exemplary embodiment of the present disclosure.

### Detailed Description

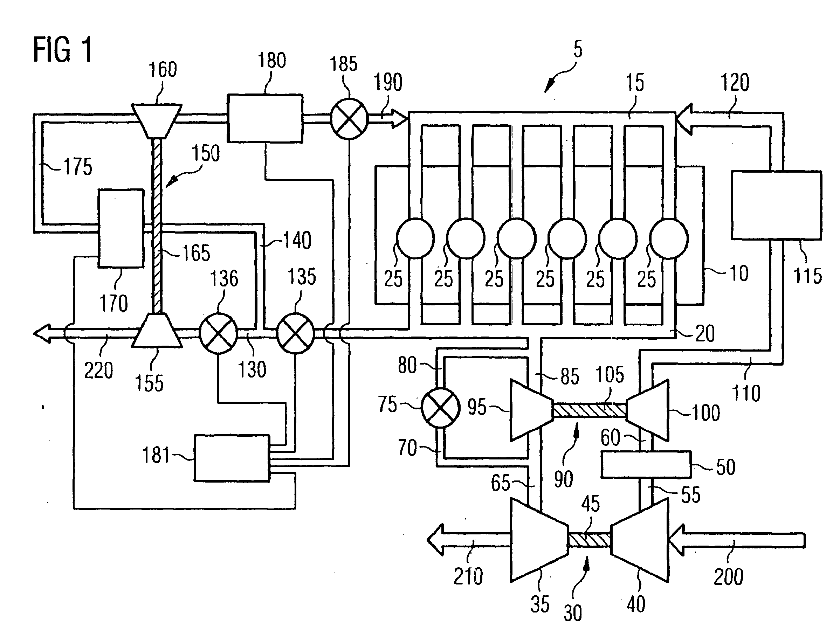

A first exemplary embodiment of an exhaust gas recirculation system 5 configured to be used in a large internal combustion engine 10 having an air inlet 15 and an exhaust gas outlet 20 will be described in the following with reference to Fig. 1.

Internal combustion engine 10 may comprise one or more cylinders and associated combustion chambers 25. Combustion chambers 25 may be connected to both air inlet 15 (e.g. an inlet air manifold) and exhaust gas outlet 20. Exhaust gas outlet 20 may be connected to an exhaust gas line 130. Exhaust gas line 130 may include a first valve 135 and/or second valve 136. Both valves 135 and 136 may be connected to a control unit 181. Upstream of second valve 136 and downstream of first valve 135 an exhaust gas recirculation line 140 may branch off. An exhaust gas turbine 155 may be located downstream of second valve 136. Exhaust gas turbine 155 may be a component of an exhaust gas supercharger system 150. An exhaust gas compressor 160 may be driven via a shaft 165 by exhaust gas turbine 155. Exhaust gas recirculation line 140 may be connected to a first exhaust gas cooler 170. An outlet of exhaust gas cooler 170 may be connected to a further exhaust gas recirculation line 175, which may supply the cooled exhaust gas to exhaust gas compressor 160.

Another part of exhaust gas recirculation line 175 may connect exhaust gas compressor 160 and a second exhaust gas cooler 180 with each other. A third valve 185 may be arranged downstream of second exhaust gas cooler 180. First, second and third valve 185 each may consist of a simple throttle allowing blocking or unblocking the exhaust gas flow and the recirculation of exhaust gases via lines 140, 175. An end part of the exhaust gas recirculation line may open downstream of valve 185 into manifold 15.

In the following, a multiple supercharger system arrangement of internal combustion engine 10 is described. A first supercharger system 30 may comprise a first turbine 35 and a first compressor 40 which may be driven by first turbine 35 via a shaft 45. A second supercharger system 90 may comprise a second turbine 95 and a second compressor 100 which may be driven via a shaft 105 by second turbine 95. A first intake air cooler 50 may be arranged downstream of first intake air compressor 40, and a second intake air cooler 115 may be arranged downstream of a second intake air compressor 100. Intake air lines 55 and 60 may interconnect first intake air cooler 50 with first intake air compressor 40 and second air compressor 100. Second intake air compressor 100 may be connected to second air cooler 115. Intake air cooler 115 in turn may connect to intake manifold 15 of internal combustion engine 10.

Exhaust gas outlet 20 of internal combustion engine 10 may be connected to second turbine 95 of second supercharger system 90. Second turbine 95 of supercharger system 90 in turn may be connected to first turbine 35 of first supercharger system 30. An exhaust gas line 85 may branch off from exhaust gas outlet 20 to guide a partial exhaust gas flow to second turbine 95. Downstream of exhaust gas outlet 20 and upstream of second turbine 95 a branch line 80 may be provided and connected to a valve 75. Valve 75 in turn may be connected to a exhaust gas line 70 opening into connecting line 65 located between first turbine 35 and second turbine 95.

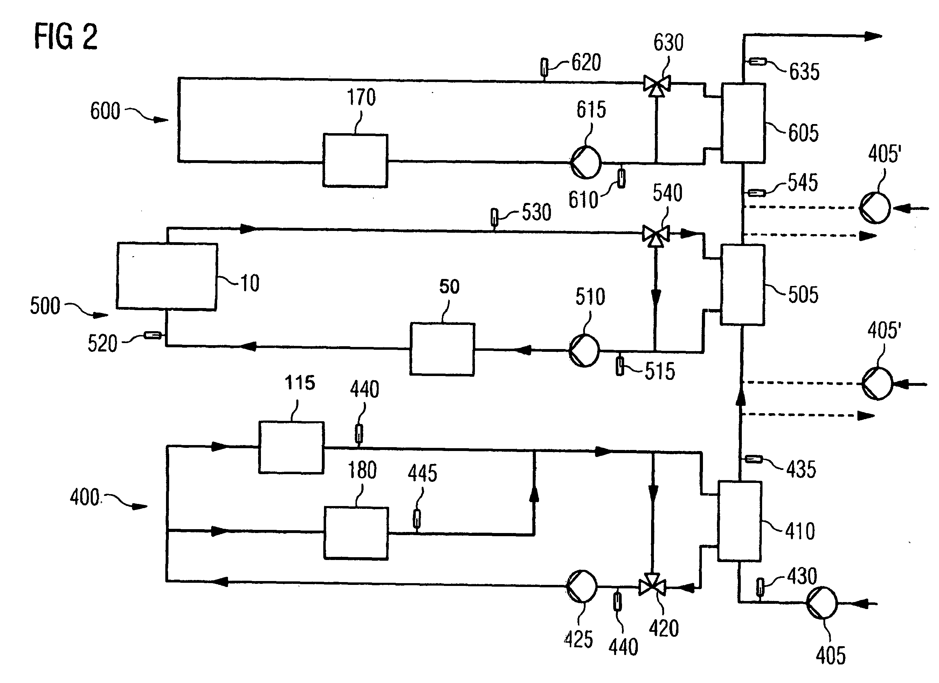

Fig. 2 shows a schematic cooling circuit for an internal combustion engine as, e.g., shown in Fig. 1. The cooling circuit of the internal combustion engine 10 may comprise a low temperature (LT) cooling circuit 400, a high temperature (HT) cooling circuit 500 and a super high temperature (SHT) cooling circuit 600.

LT cooling circuit 400 may comprise a LT cooler 410 supplied with, e.g., sea water by means of a sea water pump 405. The temperature of the cooling medium, e.g. water (separate from sea water) circulating in LT cooling circuit 400 pumped by LT pump 425 may be, e.g. 32 **°**C. The portion of the cooling medium circulating in LT cooling circuit 400 not flowing through cooler 410 may be adjusted by valve 420 and dependant on the temperature detected by temperature sensor 440. Accordingly, the temperature of the cooling medium circulating may be adjusted to the desired value, e.g. 32 **°**C. Accordingly, temperature sensor 440 and valve 420 may be connected to control unit 181.

The cooling medium of LT cooling circuit 400 may flow after passing LT cooler 410 through second exhaust gas cooler 180 and parallel to second intake cooler 115. A temperature display 440 may be arranged downstream of intake air cooler 115. A further temperature display 445 may be arranged downstream of exhaust gas cooler 180. The temperature of the cooling medium leaving the second exhaust gas cooler 180 may be about 47,6°C. The temperature of the cooling medium leaving intake air cooler 115 may be about 44,90°C.

The high temperature (HT) cooling circuit 500 may comprise a HT cooler 505, a HT pump 510, the first intake air cooler 50 and internal combustion engine 10. A temperature sensor 530 may be located downstream of engine 10. A temperature display 515 may be located upstream of HT pump 510 and another temperature display may be located upstream of engine 10. The cooling medium of HT cooling circuit 500 may be pumped by HT pump 510 through first intake air cooler 50 and the engine 10. The temperature displayed on display 515 may be about 69°C. The temperature of the cooling medium leaving intake air cooler 50 may be about 80°C, which may be displayed by display 520. After the cooling medium, e.g. water, is recirculated through internal combustion engine 10 its temperature may be about 90**°**C. The temperature may be determined by sensor 530. Again, via a valve 540 the part of the cooling medium recirculated within the HT cooling circuit 500 not passing through HT cooler 505 may be adjusted.

Finally, super high temperature (SHT) cooling circuit 600 is explained. SHT cooling circuit 600 may comprise a SHT cooler 605 connected to HT cooler 505. Via a pump 615 the cooling medium of the SHT cooling circuit 600 is pumped through first exhaust gas cooler 170. The temperature of the cooling medium may be around 150°C, which may be determined by sensor 610. The cooling medium temperature downstream of first exhaust gas cooler 170 may be around 162°C. This temperature may be displayed on temperature display 620. Again, via a valve 630 the part of the cooing medium recirculated within circuit 600 not passing through SHT cooler 605 may be adjusted. The advantage to supply first exhaust gas cooler 170 with very high temperature water may be that it can be guaranteed that at least the surfaces of first exhaust gas cooler 170 do not have a temperature below a dew point of a specific component, e.g. sulphur acid etc., of the exhaust gas to be cooled by first exhaust gas cooler 170. Thus, disadvantage corrosion may within first exhaust gas cooler 170 may be reduced or even prevented. In addition, it might be possible to reduce or even avoid corrosion in exhaust gas compressor 160 and at the entry of low temperature cooler 180.

It may also be possible to separate the various cooling circuits 400, 500, and 600 from each other. This alternative, exemplary embodiment of a cooling system including three separate cooling circuits, namely LT cooling circuit 400, HT cooling circuit 500, and SHT cooling circuit 600, is shown Fig. 2 in dashed lines. In this case each cooling circuit 400, 500, and 600 may have its own sea water pump 405' and its own return line. Hence, in this exemplary embodiment of cooling system 400, 500, 600 there is no fluid connection between LT cooler 410 and HT 505, or between HT cooler 505 and SHT cooler 605.

### Industrial Applicability

In the following, the basic operation of the above exemplary embodiment of exhaust gas recirculation system 5 is explained with reference to Fig. 1 and 2. During normal operation of the internal combustion engine 10 a continuous flow of exhaust gas leaves the internal combustion engine 10 at the exhaust gas outlet 20. A partial exhaust gas flow enters via line 85 second turbine 95 of supercharger system 90. Via valve 75 the part of the exhaust gas flowing within line 85 by-passing the second turbine 95 may be adjusted. The exhaust gas entering second turbine 95 may cause rotation of second turbine 95 and, consequently, second compressor 100 may be driven. Exhaust gas discharged by second turbine 95 may enter into first turbine 35 of first supercharger system 30. Again, first turbine 35 may be caused to rotate due to exhaust gas entering. After leaving first turbine 35 exhaust gas flow 210 may be guided into the atmosphere or anywhere else.

The rotation of first turbine 35 may cause via shaft 45 rotation of compressor 40. Due to the rotation of first compressor 40 intake air 200 may be compressed and guided through first intake air cooler 50 to second intake air compressor 100. Accordingly, intake air 200 may be compressed, cooled, and again compressed. There may be only one supercharger system or more than two supercharger systems, contrary to the exemplary embodiment shown in Fig. 1. The intake air compressed at least once may flow in intake air line 110 to second intake air cooler 115. There, the compressed intake air may be cooled again and then may flow via intake air line 120 into manifold 15, where the intake air compressed and cooled may mix with recirculated exhaust gas flow 190.

As shown in Fig. 1, an exhaust gas 190 flow to be recirculated may enter into first exhaust gas cooler 170 and may be then compressed by exhaust gas compressor 160. The exhaust gas flow 190 leaving compressor 160 may have, due to the compression step, a higher temperature as desired and, therefore, may be cooled within second exhaust gas cooler 180 before the cooled and compressed exhaust gas flow 190 may enter into manifold 15. If a specific portion of the exhaust gas may be guided through line 130 and the rest of the exhaust gases may be recirculated through lines 140 and 175, valves 135 and 185 receive both a control signal from control unit 181 causing that both valves 135 and 185 unblock the flowing path. Simultaneously, valve 136 may receive an appropriate control signal causing that the passage of exhaust gases is only partly blocked so that a specific portion of exhaust gas may flow through turbine 155 and the rest of the exhaust gas may be recirculated.

In an exemplary embodiment of the present disclosure first exhaust gas cooler 170 may be arranged as far as possible upstream of exhaust gas compressor 160. In case that first exhaust gas cooler 170 is controlled such that the exhaust gas leaving exhaust gas cooler 170 has a temperature above the dew point of a component of the exhaust gas flow, e.g. sulphur or sulphured acid, corrosion or other negative effects within the piping system up to exhaust gas compressor 160 or even up to second exhaust gas cooler 180 may be reduced or prohibited. Second exhaust gas cooler 180 may be controlled by control unit 181 such that the temperature of the exhaust gas leaving exhaust gas cooler 180 is relatively low, e.g. below the dew point of the component of the exhaust gas mentioned above.

An advantage of cooling of the exhaust gas may be that the efficiency of the combustion of the mixture of cooled and compressed exhaust gas 190 and cooled and compressed intake air 120 at air inlet 15 of internal combustion engine 10 may be improved.

Although the preferred embodiments of this invention have been described herein, improvements and modifications may be incorporated without departing from the scope of the following claims.

## Claims

1. An exhaust gas recirculation system (5) configured to be used in a large internal combustion engine (10) having an air inlet (15) and an exhaust gas outlet (20), the exhaust gas recirculation system comprising:
an exhaust gas recirculation line (140, 175, 190) configured to recirculate a first partial exhaust gas flow (190) to the air inlet (15) of the large internal combustion engine (10);
a exhaust gas discharge line (130) fluidly connected to the exhaust gas recirculation line (140, 175, 190) and configured to discharge at least a second partial exhaust gas flow (220);
an exhaust gas turbine (155) configured to be driven by the second partial exhaust gas flow (220);
an exhaust gas compressor (160) configured to be driven by the exhaust gas turbine (155) and to compress the exhaust gas of the first partial exhaust gas flow (190);
a first exhaust gas cooler (170) arranged upstream of the exhaust gas compressor (160) and configured to cool the exhaust gas of the first partial exhaust gas flow (190); and
a second exhaust gas cooler (180) arranged downstream of the exhaust gas compressor (160) and configured to cool the compressed exhaust gas of the first partial exhaust gas flow (190), wherein
the first exhaust gas cooler (170) is configured to cool the exhaust gas of the first partial exhaust gas flow (190) to a temperature above a dew point of a predetermined component of the exhaust gas, and/or
the second exhaust gas cooler (180) is configured to cool the compressed exhaust gas of the first partial exhaust gas flow (190) to a temperature below the dew point of the predetermined component of the exhaust gas.

2. The exhaust gas recirculation system of any one of the preceding claims, further comprising:
a first supercharger system (30) including a first turbine (35) configured to be driven by a third partial exhaust gas flow (210) and a first compressor (40) configured to be driven by the first turbine (35);
a second supercharger system system (90) including a second turbine (95) configured to be driven by a fourth partial exhaust gas flow (85) and a second compressor (100) configured to be driven by the second turbine (95);
a first charge air cooler (50) interconnected between the first compressor (40) and the second compressor (100); and
a second charge air cooler (115) interconnected between the second compressor (100) and the air inlet (15) of the large internal combustion engine (10).

3. The exhaust gas recirculation system of claim 2, further comprising:
an intake manifold (15) configured to receive intake air compressed and cooled and exhaust gas compressed and cooled, the intake manifold (15) being connected to the second exhaust gas cooler (180) and to the second charge air cooler (115).

4. The exhaust gas recirculation system of any one of the preceding claims, further comprising:
a control unit (181) configured to control temperature of a cooling medium of the first exhaust gas cooler (170) so that the exhaust gas leaving the first exhaust gas cooler (170) has a temperature above a dew point of a predetermined component of the exhaust gas.

5. The exhaust gas recirculation system of any one of the preceding claims, further comprising:
a control unit (181) configured to control temperature of a cooling medium of the second exhaust gas cooler (180) so that the compressed exhaust gas leaving the second exhaust gas cooler (180) has a temperature below the dew point of a predetermined component of the exhaust gas.

6. The exhaust gas recirculation system of any one of the preceding claims, wherein:
the first exhaust gas cooler (170) is located closer to the exhaust gas outlet (20) than to the exhaust gas compressor (160); and/or
the second exhaust gas cooler (180) is located closer to the intake air inlet (15) than to the exhaust gas compressor (160).

7. A large internal combustion engine (10) comprising:
an air inlet (15), an exhaust gas outlet (20), and an exhaust gas recirculation system (5) of any one of claims 1-6.

8. A method for recirculating an exhaust gas flow of a large internal combustion engine (10) having an air inlet (15) and an exhaust gas outlet (20), the method comprising the steps of:
diverting a first partial exhaust gas flow (190) originating from the exhaust gas outlet (20) of the large internal combustion engine (10);
cooling the exhaust gas of the first partial exhaust gas flow (190);
compressing the cooled first partial exhaust gas flow (190);
cooling the compressed exhaust gas of the first partial exhaust gas flow (190); and
supplying the cooled and compressed first partial exhaust gas flow (190) to the air inlet (15) of the large internal combustion engine (10), wherein
the method step of cooling the exhaust gas of the first partial exhaust gas flow (190) before conducting the compressing step includes the cooling of the exhaust gas of the first partial exhaust gas flow (190) to a temperature above a dew point of a predetermined component of the exhaust gas; and/or
the method step of cooling the exhaust gas of the first partial exhaust gas flow (190) after conducting the compressing step includes the cooling of the first partial exhaust gas flow (190) to a temperature below the dew point of the predetermined component of the exhaust gas.

9. The method of claim 8, wherein the dew point is that of at least one element of the group consisting of sulphur acid, sulphured acid, solid/inorganic contaminants of HFO, asphaltenes, and carbon residues.

10. The method of claim 8, further comprising the step of mixing the recirculated first partial exhaust gas flow (190) cooled and compressed and fresh air compressed and cooled at the air inlet (15) of the internal combustion engine (10).

## Patentansprüche

1. Abgasrückführsystem (5) zur Verwendung mit einer großen Brennkraftmaschine (10) mit innerer Verbrennung, die einen Lufteinlass (15) und einen Abgasauslass (20) aufweist, mit:
einer Abgasrückführleitung (140, 175, 190), die zum Rückführen eines ersten Teilabgasstroms (190) zu dem Lufteinlass (15) der großen Brennkraftmaschine (10) mit innerer Verbrennung ausgebildet ist;
einer Abgasabführleitung (130), die mit der Abgasrückführleitung (140, 175, 190) fluidverbunden ist und zum Abführen mindestens eines zweiten Teilabgasstroms (220) ausgebildet ist;
einer Abgasturbine (155), die dazu ausgebildet ist, von dem zweiten Teilabgasstrom (220) angetrieben zu werden;
einem Abgaskompressor (160), der dazu ausgebildet ist, von der Abgasturbine (155) angetrieben zu werden und das Abgas des ersten Teilabgasstroms (190) zu komprimieren;
einem ersten Abgaskühler (170), der stromaufwärts des Abgaskompressors (160) angeordnet ist und zum Kühlen des Abgases des ersten Teilabgasstroms (190) ausgebildet ist; und
einem zweiten Abgaskühler (180), der stromabwärts des Abgaskompressors (160) angeordnet ist und zum Kühlen des komprimierten Abgases des ersten Teilabgasstroms (190) ausgebildet ist, wobei
der erste Abgaskühler (170) zum Kühlen des Abgases des ersten Teilabgasstroms (190) auf eine Temperatur oberhalb eines Taupunkts einer vorbestimmten Komponente des Abgases ausgebildet ist, und/oder
der zweite Abgaskühler (180) zum Kühlen des komprimierten Abgases des ersten Teilabgasstroms (190) auf eine Temperatur unterhalb des Taupunkts der vorbestimmten Komponente des Abgases ausgebildet ist.

2. Abgasrückführsystem nach einem der vorhergehenden Ansprüche, ferner mit:
einem ersten Aufladesystem (30) mit einer ersten Turbine (35), die dazu ausgebildet ist, von einem dritten Teilabgasstrom (210) angetrieben zu werden, und einem ersten Kompressor (40), der dazu ausgebildet ist, von der ersten Turbine (35) angetrieben zu werden;
einem zweiten Aufladesystem (90) mit einer zweiten Turbine (95), die dazu ausgebildet ist, von einem vierten Teilabgasstrom (85) angetrieben zu werden, und einem zweiten Kompressor (100), der dazu ausgebildet ist, von der zweiten Turbine (95) angetrieben zu werden;
einem ersten Ladeluftkühler (50), der zwischen dem ersten Kompressor (40) und dem zweiten Kompressor (100) verbunden ist; und
einem zweiten Ladeluftkühler (115), der zwischen dem zweiten Kompressor (100) und dem Lufteinlass (15) der großen Brennkraftmaschine (10) mit innerer Verbrennung verbunden ist.

3. Abgasrückführsystem nach Anspruch 2, ferner mit:
einem Ansaugkrümmer (15), der zum Empfangen von komprimierter und gekühlter Ansaugluft und komprimiertem und gekühltem Abgas ausgebildet ist und mit dem zweiten Abgaskühler (180) und dem zweiten Ladeluftkühler (115) verbunden ist.

4. Abgasrückführsystem nach einem der vorhergehenden Ansprüche, ferner mit:
einer Steuereinheit (181), die zum Steuern einer Temperatur eines Kühlmediums des ersten Abgaskühlers (170) ausgebildet ist, so dass das Abgas, das den ersten Abgaskühler (170) verlässt, eine Temperatur oberhalb eines Taupunkts einer vorbestimmten Komponente des Abgases aufweist.

5. Abgasrückführsystem nach einem der vorhergehenden Ansprüche, ferner mit:
einer Steuereinheit (181), die zum Steuern einer Temperatur eines Kühlmediums des zweiten Abgaskühlers (180) ausgebildet ist, so dass das komprimierte Abgas, das den zweiten Abgaskühler (180) verlässt, eine Temperatur unterhalb des Taupunkts einer vorbestimmten Komponente des Abgases aufweist.

6. Abgasrückführsystem nach einem der vorhergehenden Ansprüche, bei dem:
sich der erste Abgaskühler (170) näher an dem Abgasauslass (20) als an dem Abgaskompressor (160) befindet; und/oder
sich der zweite Abgaskühler (180) näher an dem Ansauglufteinlass (15) als an dem Abgaskompressor (160) befindet.

7. Großbrennkraftmaschine (10) mit innerer Verbrennung, mit:
einem Lufteinlass (15), einem Abgasauslass (20) und einem Abgasrückführsystem (5) nach einem der Ansprüche 1-6.

8. Verfahren zum Rückführen eines Abgasstroms einer großen Brennkraftmaschine (10) mit innerer Verbrennung, die einen Lufteinlass (15) und einen Abgasauslass (20) aufweist, mit folgenden Schritten:
Abzweigen eines ersten Teilabgasstroms (190), der von dem Abgasauslass (20) der großen Brennkraftmaschine (10) mit innerer Verbrennung ausgeht;
Kühlen des Abgases des ersten Teilabgasstroms (190);
Komprimieren des gekühlten ersten Teilabgasstroms (10);
Kühlen des komprimierten Abgases des ersten Teilabgasstroms (190); und
Zuführen des gekühlten und komprimierten ersten Teilabgasstroms (190) zu dem Lufteinlass (15) der großen Brennkraftmaschine (10) mit innerer Verbrennung, wobei
der Schritt des Kühlens des Abgases des ersten Teilabgasstroms (190) vor dem Komprimieren das Kühlen des Abgases des ersten Teilabgasstroms (190) auf eine Temperatur oberhalb eines Taupunkts einer vorbestimmten Komponente des Abgases beinhaltet; und/oder
der Schritt des Kühlens des Abgases des ersten Teilabgasstroms (190) nach dem Komprimieren das Kühlen des ersten Teilabgasstroms (190) auf eine Temperatur unterhalb des Taupunkts der vorbestimmten Komponente des Abgases beinhaltet.

9. Verfahren nach Anspruch 8, bei dem der Taupunkt der mindestens eines Elements aus der Gruppe ist, die aus Schwefelsäure, schwefliger Säure, festen/anorganischen Verunreinigungen von HFO, Asphaltenen und Koksrückständen besteht.

10. Verfahren nach Anspruch 8, ferner beinhaltend das Mischen des gekühlten und komprimierten rückgeführten ersten Teilabgasstroms (190) mit komprimierter und gekühlter Frischluft an dem Lufteinlass (15) der Brennkraftmaschine (10) mit innerer Verbrennung.

## Revendications

1. Système de recirculation des gaz d'échappement (5) configuré pour être utilisé dans un gros moteur à combustion interne (10) possédant une entrée pour l'air (15) et une sortie (20) pour les gaz d'échappement, le système de recirculation des gaz d'échappement comprenant :
un conduit de recirculation des gaz d'échappement (140, 175, 190) configuré pour la remise en circulation d'un premier flux partiel de gaz d'échappement (190) en direction de l'entrée pour l'air (15) du gros moteur à combustion interne (10) ;
un conduit d'évacuation des gaz d'échappement (130) relié par fluide au conduit de recirculation des gaz d'échappement (140, 175, 180) et configuré pour évacuer au moins un deuxième flux partiel de gaz d'échappement (220) ;
une turbine à gaz d'échappement (155) configurée pour être entraînée par le deuxième flux partiel de gaz d'échappement (220) ;
un compresseur des gaz d'échappement (160) configuré pour être entraîné par la turbine à gaz d'échappement (155) et pour comprimer les gaz d'échappement du premier flux partiel de gaz d'échappement (190) ;
un premier refroidisseur de gaz d'échappement (170) monté en amont du compresseur de gaz d'échappement (160) et configuré pour refroidir les gaz d'échappement du premier flux partiel de gaz d'échappement (190) ; et
un deuxième refroidisseur de gaz d'échappement (180) monté en aval du compresseur de gaz d'échappement (160) et configuré pour refroidir les gaz d'échappement comprimés du premier flux partiel de gaz d'échappement (190) ; dans lequel
le premier refroidisseur de gaz d'échappement (170) est configuré pour refroidir les gaz d'échappement du premier flux partiel de gaz d'échappement (190) jusqu'à une température supérieure au point de rosée d'un composant prédéterminé des gqz d'échappement ; et/ou
le deuxième refroidisseur de gaz d'échappement (180) est configuré pour refroidir les gaz d'échappement comprimés du premier flux partiel de gaz d'échappement (190) jusqu'à une température inférieure au point de rosée du composant prédéterminé des gaz d'échappement.

2. Système de recirculation des gaz d'échappement selon l'une quelconque des revendications précédentes, comprenant en outre :
un premier système de compresseur à suralimentation (30) englobant une première turbine (35) configurée pour être entraînée par un troisième flux partiel de gaz d'échappement (210) et un premier compresseur (40) configuré pour être entraîné par la première turbine (35) ;
un deuxième système de compresseur à suralimentation (90) englobant une deuxième turbine (95) configurée pour être entraînée par un quatrième flux partiel de gaz d'échappement (85) et un deuxième compresseur (100) configuré pour être entraîné par la deuxième turbine (95) ;
un premier refroidisseur d'air de suralimentation (50) relié entre le premier compresseur (40) et le deuxième compresseur (100) ; et
un deuxième refroidisseur d'air de suralimentation (115) relié entre le deuxième compresseur (100) et l'entrée pour l'air (15) du gros moteur à combustion interne (10).

3. Système de recirculation des gaz d'échappement selon la revendication 2, comprenant en outre :
un collecteur d'admission (15) configuré pour recevoir l'air d'admission, comprimé et refroidi, et les gaz d'échappement, comprimés et refroidis, le collecteur d'admission (15) étant relié au deuxième refroidisseur des gaz d'échappement (180) et au deuxième refroidisseur d'air de suralimentation (115).

4. Système de recirculation des gaz d'échappement selon l'une quelconque des revendications précédentes, comprenant en outre :
une unité de réglage (181) configurée pour régler la température d'un milieu de refroidissement du premier refroidisseur des gaz d'échappement (170) de telle sorte que les gaz d'échappement qui quittent le premier refroidisseur des gaz d'échappement (170) possèdent une température supérieure au point de rosée d'un composant prédéterminé des gaz d'échappement.

5. Système de recirculation des gaz d'échappement selon l'une quelconque des revendications précédentes, comprenant en outre :
une unité de réglage (181) configurée pour régler la température d'un milieu de refroidissement du deuxième refroidisseur des gaz d'échappement (180) de telle sorte que les gaz d'échappement comprimés qui quittent le deuxième refroidisseur des gaz d'échappement (180) possèdent une température inférieure au point de rosée d'un composant prédéterminé des gaz d'échappement.

6. Système de recirculation des gaz d'échappement selon l'une quelconque des revendications précédentes, dans lequel
le premier refroidisseur des gaz d'échappement (170) est disposé à un endroit plus proche de la sortie des gaz d'échappement (20) que le compresseur des gaz d'échappement (160) ; et/ou
le deuxième refroidisseur des gaz d'échappement (180) est disposé à un endroit plus proche de l'entrée pour l'air d'admission (15) que le compresseur des gaz d'échappement (160).

7. Gros moteur à combustion interne (10) comprenant :
une entrée pour l'air (15), une sortie (20) pour les gaz d'échappement, et un système de recirculation des gaz d'échappement (5) selon l'une quelconque des revendications 1 à 6.

8. Procédé pour la remise en circulation d'un flux de gaz d'échappement d'un gros moteur à combustion interne (10) possédant une entrée pour l'air (15) et une sortie (20) pour les gaz d'échappement, le procédé comprenant les étapes consistant à :
dévier un premier flux partiel des gaz d'échappement (190) émanant de la sortie (20) pour les gaz d'échappement du gros moteur (10) à combustion interne ;
refroidir les gaz d'échappement du premier flux partiel de gaz d'échappement (190) ;
comprimer le premier flux partiel refroidi de gaz d'échappement (190) ;
refroidir les gaz d'échappement comprimés du premier flux partiel de gaz d'échappement (190) ; et
alimenter le premier flux de gaz d'échappement refroidi et comprimé (190) à l'entrée pour l'air (15) du gros moteur (10) à combustion interne ; dans lequel
l'étape opératoire consistant à refroidir les gaz d'échappement du premier flux partiel de gaz d'échappement (190), avant la mise en oeuvre de l'étape de compression, englobe le refroidissement des gaz d'échappement du premier flux partiel de gaz d'échappement (190) jusqu'à une température supérieure au point de rosée d'un composant prédéterminé des gaz d'échappement ; et/ou
l'étape opératoire consistant à refroidir les gaz d'échappement du premier flux partiel de gaz d'échappement (190), après la mise en oeuvre de l'étape de compression, englobe le refroidissement du premier flux partiel de gaz d'échappement (190) jusqu'à une température inférieure au point de rosée du composant prédéterminé des gaz d'échappement.

9. Procédé selon la revendication 8, dans lequel le point de rosée est celui d'au moins un élément choisi parmi le groupe constitué par l'acide sulfurique, l'acide sulfuré, des contaminants solides/inorganiques de fuel-oil résiduel, des asphaltènes et des résidus de carbone.

10. Procédé selon la revendication 8, comprenant en outre l'étape consistant à mélanger le premier flux partiel de gaz d'échappement (190) remis en circulation, refroidi et comprimé, et de l'air frais, refroidi et comprimé, à l'entrée pour l'air (15) du moteur (10) à combustion interne.
